# EUROPÄISCHE PATENTSCHRIFT

(11) **EP 3 400 374 B1**
(45) Veröffentlichungstag und Bekanntmachung des Hinweises auf die Patenterteilung: **26.02.2020**
(21) Anmeldenummer: 17700963.6
(22) Anmeldetag: 19.01.2017
(51) Int. Cl.: F01D 15/10, F02C 7/268, H02J 3/18, H02K 7/118

(54) **GASTURBINEN-STRANG MIT STARTMOTOR**
GAS TURBINE SECTION WITH STARTING MOTOR
LIGNE DE TURBINE À GAZ MUNIE D'UN MOTEUR DE DÉMARRAGE

(30) Priorität: 12.02.2016 DE 102016202156
(43) Veröffentlichungstag der Anmeldung: 14.11.2018
(73) Patentinhaber: Siemens Aktiengesellschaft, 80333 München (DE)
(72) Erfinder: JURETZEK, Uwe, 91058 Erlangen (DE); BACA, Matthias, 44534 Lünen (DE); JANSEN, Rüdiger, 90427 Nürnberg (DE); KLOCKE, Meinolf, 58452 Witten (DE)
(86) Internationale Anmeldenummer: PCT/EP2017/051056
(87) Internationale Veröffentlichungsnummer: WO 2017/137227

(56) Entgegenhaltungen:
- DE-A1- 1 909 063
- DE-A1-102007 007 913
- DE-A1-102015 111 394
- JP-A- 2004 137 933

## Beschreibung

Die Erfindung betrifft ein Kraftwerk sowie ein Verfahren zu dessen Betrieb bei Netzstabilisierung.

Bisher wurden Netzdienstleistungen wie das Bereitstellen von rotierender Masse und Blindleistung quasi nebenbei durch die in Betrieb befindlichen Großkraftwerke mit großen Turbosätzen erledigt. Durch die in einigen Staaten verfolgte bevorzugte Einspeisung von Strom aus Photovoltaik- und Windkraftanlagen werden diese zumindest zeitweise aus dem Markt gedrängt bzw. vom Netz genommen und können damit diese Netzdienstleistungen nicht mehr erbringen. Photovoltaik- und Windkraftanlagen können aufgrund ihrer technischen Merkmale keine oder nur wenig Blindleistung, Kurzschlussleistung und rotierende Masse zur Sicherstellung der Netzstabilität zur Verfügung stellen. Dieses Problem wird sich zukünftig bei weiter steigendem Anteil dieser erneuerbaren Energien noch verstärken.

Außerdem besteht wegen fehlender Speichermöglichkeiten für den erneuerbaren Strom weiterhin ein Bedarf für eine schnellstartfähige gesicherte fossile Reserve für den Fall, dass der Bedarf an Strom nicht über die erneuerbaren Energien gedeckt werden kann. Dieser Bedarf an Wirkleistung und dessen schnelle Änderung kann bevorzugt über relativ günstig und schnell zu startende Gasturbinenkraftwerke gedeckt werden, die auch und gerade bei einer niedrigen Benutzungsstundenzahl vergleichsweise wirtschaftlich betreibbar sind. Deren Wirtschaftlichkeit verbessert sich weiter, wenn diese die benötigten Netzdienstleistungen (Blind- und Kurzschlussleistung sowie fest gekoppelte rotierende Massen) erbringen können, ohne dass Wirkleistung bereitgestellt werden muss.

Soll es einem Gasturbinenkraftwerk ermöglicht werden, Blindleistung, etc. bereitzustellen, ohne dass gleichzeitig Wirkleistung ins Netz abgegeben wird, muss der mit dem Netz synchronisierte Generator von der Gasturbine über eine Schaltkupplung getrennt werden können. Bei Gasturbinenkraftwerken, welche auf großen einwelligen axial abströmenden Gasturbinen basieren, führt dies zu dem Problem, das der Generator dann nicht für einen erneuten Startvorgang der Gasturbine bereitsteht (der Generator wird für diese Art Gasturbine mit Hilfe eines Anfahrumrichters zum Startmotor "umfunktioniert"), da er mit dem Netz synchronisiert als rotierender Phasenschieber zur Netzstabilisierung benötigt wird, während die Gasturbine nur mit geringer Drehzahl im Drehbetrieb (Drehbetrieb: Drehung des Rotors während der Abkühlphase, um ein Durchbiegen des heißen Rotors zu vermeiden) gehalten wird oder ggf. ganz stillsteht. Die DE 10 2015 111394 A1 offenbart ein derartiges Verfahren.

In den bisherigen Konzepten musste für den Start eines mit einer Schaltkupplung zwischen einer großen einwelligen axial abströmenden Gasturbine und Generator versehenen Gasturbinenkraftwerks der Generator vom Netz getrennt und auf die Drehzahl der Gasturbine abgebremst werden, um den Generator und die Gasturbine für den Startvorgang koppeln zu können, mit der Folge, dass die Netzdienstleistungen für eine gewisse und ggf. kritische Zeit unterbrochen werden müssen.

Praktikable Lösungen für einen vom Generator (bzw. einem separaten generatorseitig angeschlossenen Startmotor) unabhängigen Start einer großen einwelligen axial abströmenden Gasturbine gibt es bisher nicht. Vorhandene Lösungen für kleine Gasturbinen, welche z.B. einen Startmotor an ein zur Generatoranbindung vorhandenes Getriebe anschließen, sind für diese Gasturbinen nicht gegeben. Die JP 2004 137933 A offenbart beispielsweise ein Kraftwerk mit einer Kupplung und einem Startmotor, die aber nur benutzt werden, um die Gasturbine schneller zu starten. Gegen die weitere Möglichkeit die vorhandene hydraulische Drehvorrichtung (z.B. auf Basis eines Peltonrades, welches über von der Hochdruckanhebeölpumpe zur Verfügung gestelltes Schmieröl angetrieben wird) der großen einwelligen axial abströmenden Gasturbine stark zu vergrößern und somit auch zum Start der Gasturbine nutzbar zu machen, spricht der anlagentechnische Aufwand und die Ineffizienz eines solchen Systems, was wiederum die Leistungsaufnahme während des Gasturbinen-Startes entsprechend erhöhen würde und weitere Aufwendungen nach sich zieht (z.B. Vergrößerung eines ggf. vorhandenen Schwarzstartdiesels).

Aufgabe der Erfindung ist es, ein Kraftwerk bereitzustellen, das eine verbesserte Netzstabilisierung ermöglicht. Eine weitere Aufgabe der Erfindung ist es, ein entsprechendes Verfahren zur Netzstabilisierung anzugeben.

Die Erfindung löst die auf ein Kraftwerk gerichtete Aufgabe, indem sie vorsieht, dass bei einem derartigen Kraftwerk mit einer Gasturbine und einem Generator, die auf einem Strang angeordnet sind, einer die Gasturbine mit dem Generator zur Kraftübertragung verbindenden Welle, sowie einer zwischen Gasturbine und Generator in der Welle angeordneten Schaltkupplung, so dass die Welle zumindest zwei Teilwellen umfasst, mit einer ersten Teilwelle zwischen Generator und Schaltkupplung und einer als Gasturbinenzwischenwelle bezeichneten zweiten Teilwelle zwischen Gasturbine und Schaltkupplung, im Strang zwischen Schaltkupplung und Gasturbine ein elektrischer Motor zur Beschleunigung der Gasturbine angeordnet ist, der immer mit der Drehzahl der Gasturbine mitrotiert.

Erfindungsgemäß wird also ein elektrischer Startmotor direkt im Strang zwischen Gasturbine und einer bevorzugt als selbstschaltende und synchronisierende Kupplung ausgeführten Schaltkupplung positioniert. Der Motor rotiert immer mit der Drehzahl der Gasturbine mit, unabhängig davon ob er mit Strom versorgt wird oder nicht. Er ist nur während des Starts und ggf. während der Abkühlphase (sogenannter Drehbetrieb) der Gasturbine in Betrieb (in diesem Zeitraum wird er über einen Umrichter versorgt), sonst dreht er nur im "Leerlauf" mit.

Mit einem derart angeordneten Startmotor kann eine große einwellige axial abströmende Gasturbine unabhängig von ihrem zugeordneten Generator angefahren werden.

Dies hat den Vorteil, dass eine solche Gasturbine unabhängig vom Betriebszustand des Generators gestartet werden kann, eine Unterbrechung des Phasenschieberbetriebes ist nicht mehr erforderlich. Der Synchronisierungsvorgang der Gasturbine erfolgt dabei automatisch über eine selbstschaltende und synchronisierende Kupplung sobald die Gasturbine die gleiche Drehzahl wie der Generator erreicht hat. Die Umschaltung auf Wirkleistungsbetrieb erfolgt somit ohne Unterbrechung.

Darüber hinaus kann dieser im Strang positionierte Motor auch die Funktion des Antriebes im Drehbetrieb der Gasturbine übernehmen und ersetzt die dafür in der Regel bisher eingesetzte hydraulische Drehvorrichtung.

Insgesamt ergibt sich damit für den Kraftwerksbetreiber die Möglichkeit, auch in Zeiten in welchen das fossil befeuerte Gasturbinenkraftwerk aufgrund der Bevorzugung der erneuerbaren Energien keine Wirkleistung ins Netz liefern kann, unterbrechungsfrei Blindleistung und rotierende Masse als Netzdienstleistung bereitstellen zu können und damit auch ohne dass Wirkleistung abgegeben wird, einen Einnahmestrom zu generieren bzw. geforderte Einspeiserandbedingungen zu erfüllen. Zu diesem Zweck werden die bereits vorhandenen Kraftwerkskomponenten bzw. sonstige Infrastruktur auch während dieser Zeiten eingesetzt. Die zusätzliche Investition dafür ist auf einen vergleichsweise geringen Betrag hauptsächlich für Startmotor und selbstschaltende und synchronisierende Kupplung begrenzt.

Das beschriebene Konzept kann natürlich auch bei anderen auf großen einwelligen axial abströmenden Gasturbinen basierenden Kraftwerkstypen insbesondere bei sogenannten Gas- und Dampfkraftwerken eingesetzt werden.

Gegenüber der ansonsten denkbaren Möglichkeit den Start der Gasturbine über einen nicht direkt im Strang befindlichen seitlich über ein Getriebe, etc. an die Hauptwelle angebundenen elektrischen Startmotor zu realisieren, hat das Kraftwerk gemäß der Erfindung den Vorteil, dass es mit weniger Komponenten auskommt (damit geringere Kosten und höhere Verfügbarkeit) und weniger Verluste aufweist.

Der zusätzliche Startmotor zwischen Generator und Gasturbine ermöglicht somit einen höchst flexiblen Betrieb eines gasturbinenbasierten Kraftwerkes und bedient damit die zukünftigen Anforderungen von internationalen Grid Codes. Neben sehr schnellem Bereitstellen von Wirkleistungen je nach Bedarf mit hohen Änderungsgradienten kann Blind- und Kurzschlussleistung völlig unabhängig vom Gasturbinen-Betrieb zur Verfügung gestellt werden und erhöht damit den Beitrag zur Frequenzstabilisierung durch rotierende Massen. So kann das Gasturbinenkraftwerk sowohl als Wirkleistungserzeuger aber auch als rotierender Phasenschieber zu jeden Zeitpunkt betrieben werden. Bisherige Konzepte lassen einen gleichzeitigen Betrieb nicht zu.

In einer vorteilhaften Ausführungsform der Erfindung ist der Motor ein Asynchronmotor. Diese sind robust und kostengünstig. Andere Bauformen, wie z.B. Drehstromsynchronmotoren, sind ebenfalls denkbar.

Besonders vorteilhaft ist dabei eine Ausführungsform, bei welcher der Motor die bisherige Aufgabe und Position der Gasturbinen-Zwischenwelle übernimmt; er wird also gewissermaßen in die Zwischenwelle integriert. Die Zwischenwelle hat die Aufgabe, die Leistung der Gasturbine durch den Ansaugkanal hindurch weiter Richtung Kupplung und schlussendlich zum Generator zu übertragen. Die Welle muss dabei immer so bemessen sein, dass sie das gesamte Moment zwischen der Gasturbine und dem Generator sowohl bei Nennbetrieb als auch im Störfall übertragen kann. Der Startmotor könnte dabei als Asynchronmaschine mit Käfigmassivläufer als Rotor gestaltet werden, was die Integration in die Zwischenwelle relativ einfach gestalten würde. Es müsste in der Zwischenwelle nur ein Rotorballen vorgesehen werden, der abgesetzt vom Rest der Zwischenwelle ist. In diesen müssten Nuten für die Stäbe des Rotorkäfigs eingefräst werden. In die Nuten werden die zugehörigen Kupferstäbe getrieben. An den stirnseitigen Enden werden Stäbe und Rotorballen mit aufgelöteten Kurzschlussringen verbunden, so dass die Zwischenwelle zumindest teilweise als Käfigmassivläufer ausgestaltet ist.

In einer vorteilhaften Ausführungsform ummantelt ein Drehfeldständer die Zwischenwelle im Bereich des Rotorballens und ist zur besseren Montage und Demontage mehrteilig ausgeführt.

Alternativ zur Ausführungsform bei welcher der Motor die bisherige Aufgabe und Position der Gasturbinen-Zwischenwelle übernimmt, kann es auch vorteilhaft sein, wenn die Zwischenwelle und der Motor über Flansche miteinander verbunden sind. Diese alternative Konfiguration mit einem separaten (Welle des Motors und Zwischenwelle sind zwei Bauteile, welche über Flansche miteinander verbunden sind) im Strang installierten Motor zusätzlich zur bisherigen Zwischenwelle oder einer modifizierten (verkürzten) Zwischenwelle ist ebenfalls möglich.

In einer vorteilhaften Ausführungsform der Erfindung umfasst das Gasturbinenkraftwerk weiter einen Ansaugkanal für in einem Verdichter der Gasturbine zu verdichtende Luft, wobei der Motor im Ansaugkanal angeordnet ist. Der Motor würde somit kein eigenes Gehäuse benötigen und wird gleichzeitig durch die vom Gasturbinen-Verdichter angesaugte Luft gekühlt.

In einer alternativen Ausführungsform der Erfindung ist der Motor außerhalb des Ansaugkanals angeordnet, was den Vorteil hat, dass nicht in den Ansaugbereich der Gasturbine eingegriffen werden muss und somit die Integration in den bisherigen Standard erleichtert wird.

Jedenfalls nimmt die Stranglänge nicht (im Falle der Positionierung des Startmotors auf der Zwischenwelle innerhalb des Ansaugkanals) oder nur geringfügig (im Falle der Positionierung des Startmotors auf der Zwischenwelle außerhalb des Ansaugkanals) zu. Es muss auch keine zusätzliche "ungewöhnlich dicke" Welle für den Motor bereitgestellt werden.

Das Kraftwerk nach der Erfindung umfasst weiter einen Umrichter, der mit dem Generator verbunden ist, um diesen für die Synchronisierung mit dem Netz zu beschleunigen. Dabei ist es zweckmäßig, wenn der Umrichter auf den Motor umschaltbar ist, so dass dieser Umrichter auch zur Versorgung des Motors verwendet werden kann.

Die auf ein Verfahren gerichtete Aufgabe wird gelöst durch ein Verfahren zum Betreiben eines Kraftwerks im Netzstabilisierungsbetrieb, das Kraftwerk umfassend auf einem Strang angeordnet eine Gasturbine, einen Generator, eine die Gasturbine mit dem Generator zur Kraftübertragung verbindende Welle, sowie eine zwischen Gasturbine und Generator in der Welle angeordnete Schaltkupplung, wobei in einer ersten Phase der Generator mit einem Stromnetz synchronisiert ist und als rotierender Phasenschieber zur Netzstabilisierung benötigt wird, während die Gasturbine im Drehbetrieb gehalten wird oder stillsteht, und ist dadurch gekennzeichnet, dass in einer zweiten Phase der Generator mit dem Netz synchronisiert bleibt und die Gasturbine über einen im Strang des Kraftwerks angeordneten Motor gestartet wird.

Dabei ist es zweckmäßig, wenn bei einer Drehzahl der Gasturbine zwischen Zünddrehzahl und Synchronisationsdrehzahl der Motor abgeschaltet wird und im Leerlauf mit der Drehzahl der Gasturbine mitdreht. Die Zünddrehzahl ist die Drehzahl, bei der der Brennstoff der Gasturbine zugeführt und gezündet wird (i.d.R. bei ca. 600 U(min)). Nach der Zündung wird der Brennstoffmassenstrom gesteigert, im ersten Schritt bis zur Synchronisierungsdrehzahl. Der Startmotor unterstützt auch nach Zündung noch die weitere Beschleunigung des GasturbinenRotors und wird erst bei ca. 2000 U/min abgeschaltet. Erst ab dann reicht die zugeführte Brennstoffmenge aus, um in einem sinnvollen Zeitraum ohne Motorunterstützung bis auf Synchronisierungsdrehzahl zu beschleunigen.

Die Erfindung wird beispielhaft anhand der Zeichnungen näher erläutert. Es zeigen schematisch und nicht maßstäblich:
- Figur 1: den Strang eines Kraftwerks, insbesondere einer Gasturbinenanlage mit in die Zwischenwelle integriertem Startmotor für die Gasturbine,
- Figur 2: einen entlang der Längsachse aufgeschnittenen Startmotor und
- Figur 3: einen Startmotor im Querschnitt.

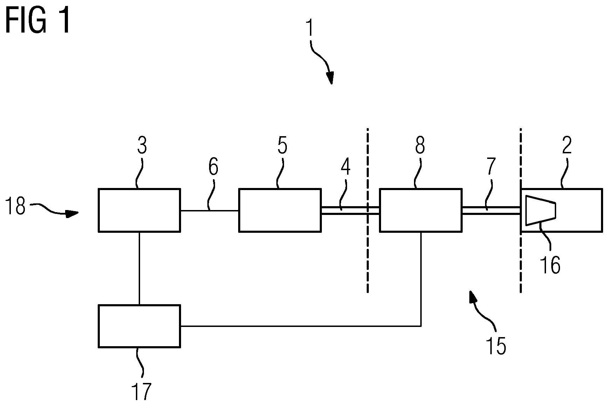

Die Figur 1 zeigt schematisch und beispielhaft ein Kraftwerk 1 mit einer Gasturbine 2 und einem Generator 3, angeordnet auf einem Strang 18. Die Gasturbine 2 ist mit dem Generator 3 zur Kraftübertragung über eine Welle 4 verbunden, in der eine Schaltkupplung 5 angeordnet ist. Dadurch umfasst die Welle zwei Teilwellen 6 und 7, mit einer ersten Teilwelle 6 zwischen Generator 3 und Schaltkupplung 5 und einer als Gasturbinenzwischenwelle 7 bezeichneten zweiten Teilwelle 7 zwischen Gasturbine 2 und Schaltkupplung 5. Gemäß der Erfindung ist im Strang 18 ein elektrischer Motor 8 zur Beschleunigung der Gasturbine 2 angeordnet. Der elektrische Startmotor 8 ist direkt im Strang 18 zwischen Gasturbine 2 und der bevorzugt als selbstschaltende und synchronisierende Kupplung ausgeführten Schaltkupplung 5 positioniert.

Die Figur 1 zeigt ein Ausführungsbeispiel, bei dem der Motor 8 im Ansaugkanal 15 für in einem Verdichter 16 der Gasturbine 2 zu verdichtende Luft angeordnet ist. Alternativ kann der Motor 8 auch außerhalb des Ansaugkanals 15 aber immer noch im Strang 18 angeordnet sein. Dies ist aber nicht gezeigt.

Ferner zeigt die Figur 1, dass ein Umrichter 17, der auf en Generator 3 geschaltet ist, zweckmäßigerweise auch auf den Motor 8 umschaltbar ist.

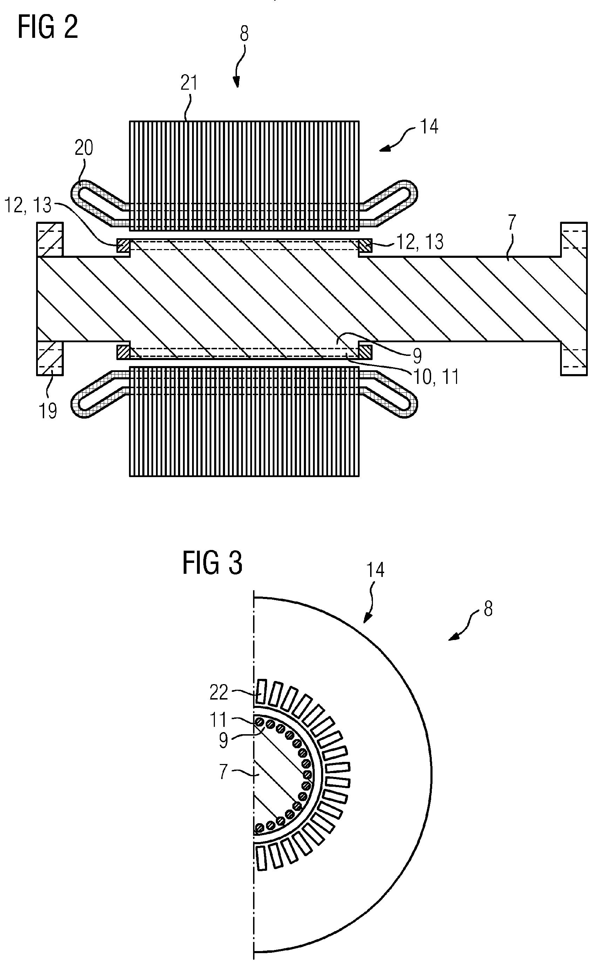

Die Figur 2 zeigt Details zum Motor 8 im Längsschnitt. Im Ausführungsbeispiel der Figur 2 ist in der Gasturbinenzwischenwelle 7 ein Rotorballen 9 vorgesehen. Der Rotorballen 9 weist Nuten 10 auf, in denen Kupferstäbe 11, die als Läuferstäbe dienen, angeordnet sind. Diese sind an ihren stirnseitigen Enden 12 über Kurzschlussringe 13 mit dem Rotorballen 9 verbunden, so dass die Gasturbinenzwischenwelle 7 zumindest teilweise als Käfigmassivläufer ausgestaltet ist.

Ferner zeigt die Figur 2 einen Drehfeldständer 14 mit einem Ständerwickelkopf 20 sowie einem Drehfeldständerblechpaket 21, der die Gasturbinenzwischenwelle 7 im Bereich des Rotorballens 9 ummantelt.

Im einfachsten Fall ist der Drehfeldständer 14 einteilig ausgeführt. Die Gasturbinenzwischenwelle 7 und der Motor 8 sind dann zweckmäßigerweise über Flansche miteinander verbunden. Figur 2 zeigt hierzu eine aufgeschrumpfte Kupplung 19.

In einer Alternativen, nicht gezeigten Ausführungsform ist der Drehfeldständer 14 zur besseren Montage und Demontage mehrteilig bzw. teilbar ausgeführt.

Die Figur 3 zeigt den Motor 8 von Figur 2 im Querschnitt mit Drehfeldständer 14, Ständernut 23 und Zwischenwelle 7 mit Rotorballen 9 und Kupferstäben 11 (= Läuferstäben).

## Patentansprüche

1. Kraftwerk (1) mit einer Gasturbine (2) und einem Generator (3), die auf einem Strang (18) angeordnet sind, einer die Gasturbine (2) mit dem Generator (3) zur Kraftübertragung verbindenden Welle (4), sowie einer zwischen Gasturbine (2) und Generator (3) in der Welle (4) angeordneten Schaltkupplung (5), so dass die Welle (4) zumindest zwei Teilwellen (6, 7) umfasst, mit einer ersten Teilwelle (6) zwischen Generator (3) und Schaltkupplung (5) und einer als Gasturbinenzwischenwelle (7) bezeichneten zweiten Teilwelle (7) zwischen Gasturbine (2) und Schaltkupplung (5), **dadurch gekennzeichnet, dass** im Strang (18) zwischen Schaltkupplung (5) und Gasturbine (2) ein elektrischer Motor (8) zur Beschleunigung der Gasturbine (2) angeordnet ist, der immer mit der Drehzahl der Gasturbine (2) mitrotiert.

2. Kraftwerk (1) nach Anspruch 1, wobei der Motor (8) ein Asynchronmotor ist.

3. Kraftwerk (1) nach einem der vorhergehenden Ansprüche, wobei in der Gasturbinenzwischenwelle (7) ein Rotorballen (9) vorgesehen ist und der Rotorballen (9) Nuten (10) aufweist, in denen Kupferstäbe (11) angeordnet sind, welche an ihren stirnseitigen Enden (12) über Kurzschlussringe (13) mit dem Rotorballen (9) verbunden sind, so dass die Gasturbinenzwischenwelle (7) zumindest teilweise als Käfigmassivläufer ausgestaltet ist.

4. Kraftwerk (1) nach Anspruch 3, wobei ein Drehfeldständer (14) die Gasturbinenzwischenwelle (7) im Bereich des Rotorballens (9) ummantelt und zur besseren Montage und Demontage mehrteilig ausgeführt ist.

5. Kraftwerk (1) nach einem der Ansprüche 1 und 2, wobei die Gasturbinenzwischenwelle (7) und der Motor (8) über Flansche miteinander verbunden sind.

6. Kraftwerk (1) nach einem der vorhergehenden Ansprüche, weiter umfassend einen Ansaugkanal (15) für in einem Verdichter (16) der Gasturbine (2) zu verdichtende Luft, wobei der Motor (8) im Ansaugkanal (15) angeordnet ist.

7. Kraftwerk (1) nach einem der Ansprüche 1 bis 5, weiter umfassend einen Ansaugkanal (15) für in einem Verdichter (16) der Gasturbine (2) zu verdichtende Luft, wobei der Motor (8) außerhalb des Ansaugkanals (15) angeordnet ist.

8. Kraftwerk (1) nach einem der vorhergehenden Ansprüche, weiter umfassend einen Umrichter (17), der mit dem Generator (3) verbunden ist, wobei der Umrichter (17) bei Bedarf auf den Motor (8) umschaltbar ist.

9. Verfahren zum Betreiben eines Kraftwerks (1) gemäß Anspruch 1 im Netzstabilisierungsbetrieb, das Kraftwerk (1) umfassend auf einem Strang (18) angeordnet eine Gasturbine (2), einen Generator (3), eine die Gasturbine (2) mit dem Generator (3) zur Kraftübertragung verbindende Welle (4), sowie eine zwischen Gasturbine (2) und Generator (3) in der Welle (4) angeordnete Schaltkupplung (5), wobei in einer ersten Phase der Generator (3) mit einem Stromnetz synchronisiert ist und als rotierender Phasenschieber zur Netzstabilisierung benötigt wird, während die Gasturbine (2) im Drehbetrieb gehalten wird oder stillsteht, **dadurch gekennzeichnet, dass** in einer zweiten Phase der Generator (3) mit dem Stromnetz synchronisiert bleibt und die Gasturbine (2) über einen im Strang (18) des Kraftwerks (1) angeordneten Motor (8) gestartet wird.

10. Verfahren nach Anspruch 9, wobei bei einer Drehzahl der Gasturbine (2) zwischen Zünddrehzahl und Synchronisationsdrehzahl der Motor (8) abgeschaltet wird und im Leerlauf mit der Drehzahl der Gasturbine (2) mitdreht.

## Claims

1. Power plant (1) with a gas turbine (2) and a generator (3) which are arranged in a train (18), a shaft (4) which connects the gas turbine (2) to the generator (3) for power transmission, and also a clutch (5) which is arranged in the shaft (4) between gas turbine (2) and generator (3) so that the shaft (4) comprises at least two shaft sections (6, 7), with a first shaft section (6) between generator (3) and clutch (5) and a second shaft section (7), referred to as the gas turbine intermediate shaft (7), between gas turbine (2) and clutch (5), **characterized in that** an electric motor (8) for accelerating the gas turbine (2) is arranged in the train (18) between clutch (5) and gas turbine (2) and always co-rotates at the rotational speed of the gas turbine (2).

2. Power plant (1) according to Claim 1, wherein the motor (8) is an asynchronous motor.

3. Power plant (1) according to either of the preceding claims, wherein provision is made in the gas turbine intermediate shaft (7) for a rotor body (9) and the rotor body (9) has slots (10) in which are arranged copper bars (11) which at their face ends (12) are connected to the rotor body (9) via short-circuit rings (13) so that the gas turbine intermediate shaft (7) is designed at least partially as a squirrel-cage solid rotor.

4. Power plant (1) according to Claim 3, wherein a rotating-field stator (14) encloses the gas turbine intermediate shaft (7) in the region of the rotor body (9) and is of a multi-piece construction for better installation and removal.

5. Power plant (1) according to either of Claims 1 and 2, wherein the gas turbine intermediate shaft (7) and the motor (8) are interconnected via flanges.

6. Power plant (1) according to one of the preceding claims, also comprising an intake duct (15) for air which is to be compressed in a compressor (16) of the gas turbine (2), wherein the motor (8) is arranged in the intake duct (15).

7. Power plant (1) according to one of Claims 1 to 5, also comprising an intake duct (15) for air which is to be compressed in a compressor (16) of the gas turbine (2), wherein the motor (8) is arranged outside the intake duct (15) .

8. Power plant (1) according to one of the preceding claims, also comprising a converter (17) which is connected to the generator (3), wherein the converter (17) can be switched over to the motor (8) when required.

9. Method for operating a power plant (1) according to Claim 1 during grid stabilization operation, the power plant (1) comprising, arranged in a train (18), a gas turbine (2), a generator (3), a shaft (4) which connects the gas turbine (2) to the generator (3) for power transmission, and also a clutch (5) which is arranged in the shaft (4) between gas turbine (2) and generator (3), wherein in a first phase the generator (3) is synchronized with a supply grid and is required as a rotating phase changer for grid stabilization while the gas turbine (2) is kept in turning operation or is stationary, **characterized in that** in a second phase the generator (3) remains synchronized with the supply grid and the gas turbine (2) is started via a motor (8) which is arranged in the train (18) of the power plant (1).

10. Method according to Claim 9, wherein in the case of a rotational speed of the gas turbine (2) between firing rotational speed and synchronization rotational speed the motor (8) is switched off and co-rotates in idling mode at the rotational speed of the gas turbine (2).

## Revendications

1. Centrale (1) électrique, comprenant une turbine (2) à gaz et un générateur (3), qui sont disposés sur une chaîne (18), un arbre (4) reliant à transmission de force la turbine (2) à gaz au générateur (3), ainsi qu'un embrayage (5), monté dans l'arbre (4) entre la turbine (2) à gaz et le générateur (3), de sorte que l'arbre (4) comprend au moins deux arbres (6,7) partiels, comprenant un premier arbre (6) partiel entre le générateur (3) et l'embrayage (5) et un deuxième arbre (7) partiel, désigné comme arbre (7) intermédiaire de turbine à gaz, entre la turbine (2) à gaz et l'embrayage (5), **caractérisée en ce que**, dans la chaîne (18), est disposé, entre l'embrayage (5) et la turbine (2) à gaz, un moteur (8) électrique d'accélération de la turbine (2) à gaz, qui tourne toujours à la même vitesse de rotation que la turbine (2) à gaz.

2. Centrale (1) suivant la revendication 1, dans laquelle le moteur (8) est un moteur asynchrone.

3. Centrale (1) suivant l'une des revendications précédentes, dans laquelle, dans l'arbre (7) intermédiaire de turbine à gaz, est prévu un relais (9) de rotor et le relais (9) de rotor a des rainures (10), dans lesquelles sont disposés des barreaux (11) de cuivre, qui sont reliés, à leurs extrémités (12) du côté frontal, au relais (9) de rotor par des anneaux (13) de court-circuit, de manière à conformer l'arbre (7) intermédiaire de turbine à gaz, au moins en partie, en induit massif à cage.

4. Centrale (1) suivant la revendication 1, dans laquelle un stator (14) à champ tournant enveloppe l'arbre (7) intermédiaire de turbine à gaz dans la partie du relais (9) du rotor et est réalisé en plusieurs parties pour faciliter le montage et le démontage.

5. Centrale (1) suivant l'une des revendications 1 et 2, dans laquelle l'arbre (7) intermédiaire de turbine à gaz et le moteur (8) sont assemblés entre eux par des brides.

6. Centrale (1) suivant l'une des revendications précédentes, comprenant un conduit (15) d'aspiration pour de l'air à comprimer dans un compresseur (16) de la turbine (2) à gaz, le moteur (8) étant monté dans le conduit (15) d'aspiration.

7. Centrale (1) suivant l'une des revendications 1 à 5, comprenant, en outre, un conduit (15) d'aspiration pour de l'air à comprimer dans un compresseur (16) de la turbine (2) à gaz, le moteur (8) étant disposé à l'extérieur du conduit (15) d'aspiration.

8. Centrale (1) suivant l'une des revendications précédentes, comprenant, en outre, un convertisseur (17), qui est relié au générateur (3), le convertisseur (17) pouvant être commuté, en cas de besoin, sur le moteur (8).

9. Procédé pour faire fonctionner une centrale (1) électrique suivant la revendication 1, en fonctionnement de stabilisation du réseau, la centrale (1) comprenant une turbine (2) à gaz et un générateur (3), qui sont disposés sur une chaîne (18), un arbre (4) reliant à transmission de force la turbine (2) à gaz au générateur (3), ainsi qu'un embrayage (5), monté dans l'arbre (4) entre la turbine (2) à gaz et le générateur (3), dans lequel, dans une première phase, le générateur (3) est synchronisé à un réseau de courant et est nécessaire comme déphaseur tournant pour la stabilisation du réseau, tandis que l'on maintient la turbine (2) à gaz dans un fonctionnement en rotation ou à l'arrêt, **caractérisé en ce que**, dans une deuxième phase, le générateur (3) reste synchronisé au réseau de courant et on fait démarrer la turbine (2) à gaz par un moteur (8) monté dans la chaîne (18) de la centrale (1) électrique.

10. Procédé suivant la revendication 9, dans lequel, à une vitesse de rotation de la turbine (2) à gaz entre la vitesse de rotation d'amorçage et la vitesse de rotation de synchronisation, on met le moteur (8) hors circuit et on le fait tourner en marche à vide à la vitesse de rotation de la turbine (2) à gaz.
